# EUROPEAN PATENT APPLICATION

(11) **EP 3 460 594 A1**
(43) Date of publication of application: **27.03.2019**
(21) Application number: 17193297.3
(22) Date of filing: 26.09.2017
(51) Int. Cl.: G05B 15/02, H04L 12/28

(54) **SYSTEMS AND METHODS FOR CONTROLLING OPERATION OF A HOME APPLIANCE**

(71) Applicant: Vestel Elektronik Sanayi ve Ticaret A.S., 45030 Manisa (TR)
(72) Inventor: ÇAKIR,, Ímdat, 45030 Manisa (TR); VARAN,, Bahri Burakhan, 45030 Manisa (TR)
(74) Representative: Flint, Adam

(57) **Abstract**

A user device (200) and controller (300) are provided for controlling operation of an appliance (400). A user (210) selects an operating program for the appliance (400) via the user device (200). The user device (200) retrieves the selected operating program and transmits it to the controller (300), which is a controller (300) of the appliance (400). In response to receiving the operating program, the controller (300) stores the operating program in a data storage (303) of the appliance (400) and causes the stored program to be executed by the appliance (400). Upon completion of the execution, the operating program is deleted from the data storage (303) of the appliance (400).

## Description

### Technical Field

The present disclosure relates to systems and methods for controlling operation of an appliance.

### Background

A washing machine is an example of an appliance that operates according to "programs" (hereafter "operating programs", to distinguish from a computer program as such) consisting of a sets of steps to be performed by the appliance. For a washing machine, the programs are typically called "wash cycles". A washing machine may be provided by the manufacturer with a large number of wash cycles which are pre-stored on an internal data storage, each wash cycle having different respective features relating to things like runtime of the cycle, washing temperature, spin speed, etc. When washing clothing, a user is able to select a desired wash cycle (e.g. "cotton", "synthetics", etc.) to be executed by the washing machine.

Other appliances (e.g. dishwashers, tumble dryers, gas or electric ovens, microwave ovens, etc.) exist which can also be operated according to operating programs. For example, a user may select a "defrost" option on a microwave oven, causing the microwave oven to run with lower power.

### Summary

According to a first aspect disclosed herein, there is provided a controller for controlling an appliance, the controller comprising: data storage for storing data; an input for receiving operating programs; and a processor configured to: in response to receiving an operating program via the input, store the operating program to the data storage; cause the stored operating program to be executed by the appliance; and delete the operating program from the data storage upon completion of said execution.

In examples, this enables the required capacity of the data storage to be minimised as the controller only stores an operating program at the time that the operating program is actually needed and used.

In an example, the data storage comprises only enough storage to store a single operating program at a time.

In an example, the data storage comprises a non-volatile data storage.

In an example, the data storage comprises a volatile data storage.

According to a second aspect disclosed herein, there is provided a user device for controlling operation of an appliance, the user device comprising: a user interface; a communications interface for enabling operating programs to be transmitted to a said appliance; and a processor configured to: receive a selection of an operating program by a user via the user interface; and cause the selected operating program to be transmitted to the appliance.

In an example, the processor is configured to cause the selected operating program to be transmitted to the appliance by obtaining the selected operating program; and transmitting the selected operating program from the user device to the appliance via the communications interface.

In an example, the processor is configured to, after obtaining the selected operating program: receive user input for editing the selected operating program prior to transmitting the operating program; amend the selected operating program in accordance with the user input; and transmit the amended operating program to the appliance.

In an example, the processor is configured to obtain the selected operating program from an internal data storage of the user device.

In an example, the processor is configured to obtain the selected operating program from an external data storage.

In an example, the processor is configured to obtain the selected operating program from the external data storage over the Internet.

According to a third aspect disclosed herein, there is provided an appliance comprising a controller as described above.

In an example, the appliance is a washing machine. In other examples, the appliance is a tumble dryer, a gas oven, an electric oven, or a microwave oven.

According to a fourth aspect disclosed herein, there is provided a system comprising a controller as described above and a user device as described above.

According to a fifth aspect disclosed herein, there is provided a computer program for controlling an appliance, the computer program comprising computer-executable code configured so as when executed by one or more processors to perform: in response to receiving an operating program for the appliance via an input, storing the operating program to a data storage of the appliance; causing the stored operating program to be executed by the appliance; and deleting the operating program from the data storage upon completion of said execution.

According to a sixth aspect disclosed herein, there is provided a computer program for a user device to enable control of operation of an appliance, the computer program comprising computer-executable code configured so as when executed by one or more processors to perform: receiving a selection of an operating program by a user via a user interface; and causing the selected operating program to be transmitted to the appliance.

### Brief Description of the Drawings

To assist understanding of the present disclosure and to show how embodiments may be put into effect, reference is made by way of example to the accompanying drawings in which:
Figure 1 shows schematically an example of a system for controlling operation of an appliance;
Figure 2 shows schematically an example of a system for controlling operation of an appliance;
Figure 3 shows an example of a user interface; and
Figure 4 shows a flow diagram illustrating an example of a control flow within the system.

### Detailed Description

On traditional appliances, including for example washing machines, a plurality of operating programs are stored on an internal data storage of the appliance, typically pre-stored by the manufacturer. A user can select one of these operating programs to be run by the appliance by using a user interface provided (typically) on the front of the appliance itself. With developing technology, the number of operating programs with which an appliance is provided, especially in the white goods sector, can be large. Users generally prefer a greater number of operating programs to be available for the appliance, as this increases the functionality of the appliance and can potentially prolong the length of time before a user buys a replacement. However, this requires the internal data storage of the appliance to be large enough to store all of the operating programs at once. A data storage of large capacity can represent a relatively large portion of the cost of the appliance.

In examples described herein, a user device and a controller are provided for controlling operation of an appliance. In an example, a user selects an operating program for the appliance via the user device. In an example, the user device retrieves the selected operating program and transmits it to the controller, which is a controller of the appliance. In another example, the user device may cause the selected operating program to be transmitted to the controller by some remote apparatus. In response to receiving the operating program, the controller stores the operating program in a data storage of the appliance and causes the stored program to be executed by the appliance. Upon completion of the execution of the operating program, the operating program is deleted from the data storage of the appliance.

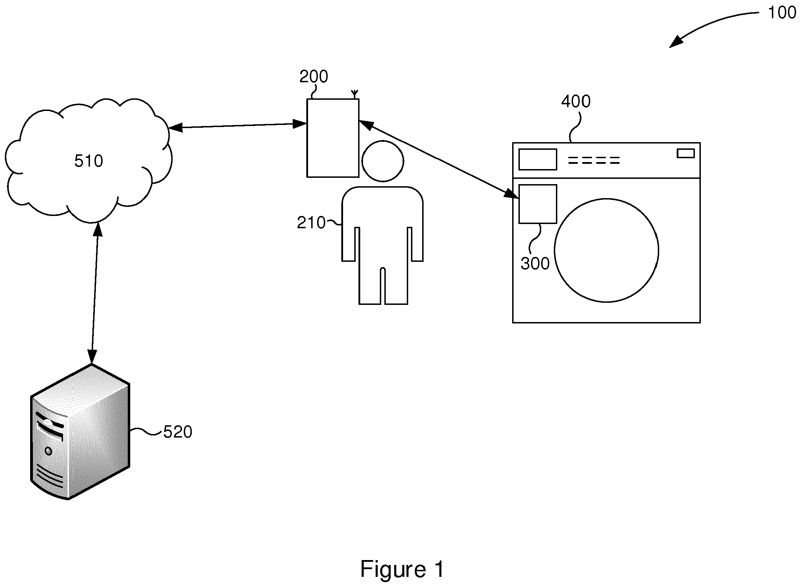

Figure 1 shows schematically an example of a system 100 comprising a user device 200 operated by a user 210 and an appliance 400 with an internal controller 300. Also shown are an optional network 510 and server 520 which are discussed further below.

The example appliance 400 shown in Figure 1 is a washing machine. The present disclosure may however be applied to other appliances that can perform tasks according to a defined schedule or program of at least one operation (referred to herein as an "operating program" or the like). Such other appliances include for example dishwashers, tumble dryers, gas ovens, electric ovens, microwave ovens, etc. In any case, it is understood that the appliance 400 is constructed and arranged to perform some task (e.g. washing clothes, heating food, etc.).

In another example, the appliance 400 is a microwave oven. A microwave oven comprises an actuator (rotary motor) for turning a heating plate, and a magnetron for generating microwaves. The processor 302, in this example, is able to control the actuator and magnetron and thereby control the heating of items placed on the heating plate. It is understood that similar control is also possible for other types of appliances 400.

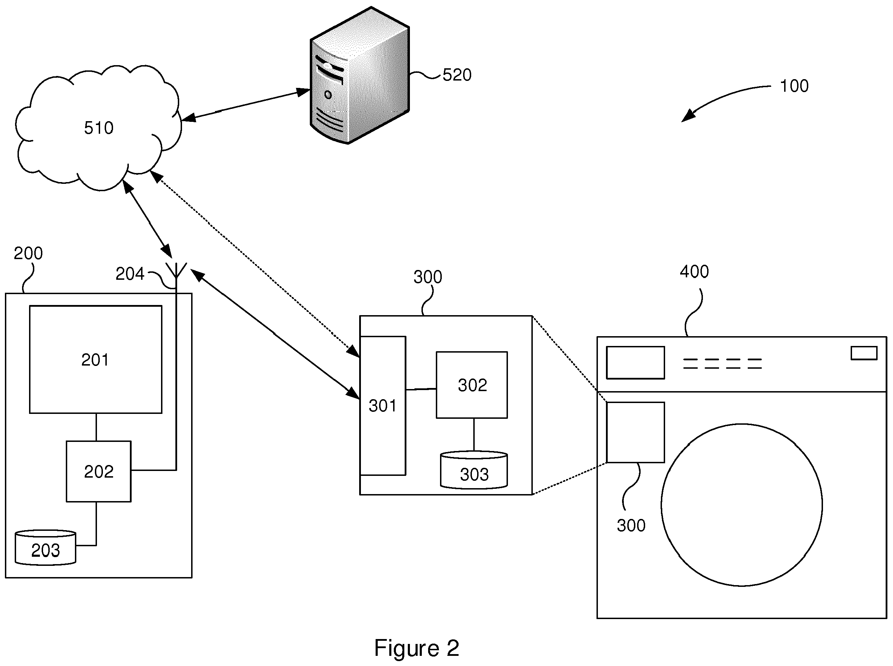

The controller 300 is a controller of the appliance 400 in that the controller 300 is for controlling operation of the appliance 400. The controller 300 may be implemented by the mainboard of the appliance 400. Operation of the appliance 400 is in accordance with "operating programs" comprising steps to be performed by the appliance 400. For example, operating programs of a washing machine are generally called "wash cycles" and consist of different settings for washing courses such as water temperature, spin speed, duration, etc. The controller 300 may be implemented locally at the appliance 400 (i.e. internally to the appliance 400 itself as shown in Figure 1) or remotely such as shown in Figure 2 (described later).

As will become clear, the user 210 is able to cause a desired operating program to be sent to the controller 300 of the appliance 400 by using the user device 200 and thereby have the desired operating program carried out by the appliance 400 (under direction from the controller 300).

The user device 200 may be connected to one or more remote storage devices such as a server 520 shown in Figure 1. This connection may be provided via one or more networks 510 shown in Figure 1. The server 520 may store one or more operating programs for the appliance 400. The network 510 may be or include the Internet. Hence, the user 210 may download operating programs from the server 520 (via the network 510) to be sent to the controller 300 and thereby carried out by the appliance 400. In such cases, the server 520 may form part of a service providing an "app store" or the like through which the user 210 may browse for and download operating programs.

Operating programs may alternatively or additionally be pre-stored on an internal storage of the user device 200 (described below) and selected by the user 210 therefrom, instead of requiring them to be downloaded from a remote server first.

Figure 2 shows the system 100 of Figure 1 but in more detail, with some of the internal components of the elements schematically shown. The controller 300 in Figure 2 is an internal controller of the appliance 400 (shown in exploded view), but the controller 300 may alternatively be an external controller implemented separately from, yet still operatively coupled to, the appliance 400 itself. In any case, the controller 300 is arranged to send control commands to one or more components of the appliance 400. For example, a washing machine comprises various actuators for regulating things like the flow of water into/out of a washing drum, the temperature of the water, and the spin speed of the drum itself. The controller 300 is able to control these actuators and thereby control operation of the appliance 400.

The controller 300 comprises an input 301, a processor 302, and a data storage 303. The processor 302 is operatively coupled to each of the input 301 and the data storage 303.

The input 301 comprises one or more data interfaces for receiving data (and optionally sending data). Such data interfaces may be provided by one or more wired or wireless arrangements (or both) as known in the art. Examples include but are not limited to Bluetooth, WiFi, and Ethernet connections. In an example the input 301 is configured to receive data from the user device 200 (described in more detail below). In other examples, the controller 300 is alternatively or additionally configured to receive data from other sources such as server 520 (also described in more detail below).

The data storage 303 is a storage device for storing data as known in the art. Examples include but are not limited to RAM, flash memories, magnetic storage devices (e.g. hard drives), etc. The data storage 303 may be a non-volatile data storage which maintains data stored thereon even in the absence of an electrical power supply. In this regard it is noted that appliances are commonly left connected to a mains power supply or the like even when the user 210 turns the appliance 400 "off" via an on/off switch of the appliance 400. Hence, power may be maintained at the controller 300 even if the appliance 400 is apparently "of". This means that conventionally, data stored in a volatile data storage 303 may not be deleted when the appliance is turned "off". Hence, the principles described herein may apply to examples in which the data storage 303 is (apparently) a volatile data storage.

The processor 302 is operatively coupled to the input 301 in that it is configured to receive data and instructions, etc. from the user device 200 via the input 301. The processor 302 is operatively coupled to the data storage 303 in that it is configured to save operating programs to the data storage 303, read operating programs from the data storage 303, and delete operating programs from the data storage 303. In other words, the data storage 303 acts as a data storage location for operating programs which is accessible by the processor 302.

The term "operating program" or "operating program flow" or the like is used herein to refer to a defined set of operations to be performed by internal devices of the appliance 400. A program (operating program) comprises a schedule of actions to be performed by (devices of) the appliance 400. The operating program therefore defines specific operation characteristics to be enacted by the appliance 400.

In examples described herein, an operating program is received by the processor 302 of the appliance controller 300 and only then stored to data storage 303 of the appliance 400. The operating program is not previously stored in the data storage of the appliance 400. The processor 302 causes the stored operating program to be run by the appliance 400 and deletes the operating program from the data storage 303 when the operating program has finished being run. This means that the data storage 303 (the data storage used for storing operating programs) can have a smaller storage capacity than in prior art systems as it does not need to store a plurality of operating programs at once or be provided with a number of pre-stored operating programs. Instead, operating programs are received by the controller 300 "on the fly" to be executed by the appliance 400.

Operating programs are provided to the controller 300 by a user by way of the user device 200, as described below. In some examples, this comprises the operating programs being sent directly from the user device 200 to the controller 300 of the appliance 400. In other examples, the operating programs are sent from an external source (e.g. server 520) to the controller 300 of the appliance 400 under instruction from the user device 200.

The user device 200 is shown in Figure 2 as a mobile phone, which may be for example a smartphone. However, the user device 200 may be another type of computing device capable of causing an operating program to be transmitted to the controller 300. Examples of other suitable computing devices include laptop computers, desktop computers, tablet computers, PDAs, etc.

The user device 200 comprises a user interface (UI) 201, a processor 202 (also referred to as user device processor 202), a data storage 203 (also referred to as user device data storage 323), and a communications interface 204.

The communications interface 204 of the user device 200 comprises one or more data interfaces for sending data (and optionally receiving data). Such data interfaces may be provided by one or more wired or wireless arrangements (or both) known in the art. Examples include but are not limited to Bluetooth, WiFi, and Ethernet connections. In examples where the user device 200 is arranged to transmit operating programs to the controller 300 of the appliance 400, the communications interface 204 of the user device 200 is compatible with the input 301 of the appliance 400.

The data storage 203 of the user device 200 is a storage device for storing data. Examples include but are not limited to RAM, flash memories, magnetic storage devices (e.g. hard drives), etc.

The processor 202 of the user device 200 is operatively coupled to the communications interface 204 and the data storage 203.

The user interface 201 is shown in Figure 2 as a touchscreen graphical user interface. Other types of user interface 201 may be used which allow the user 210 to select an operating program and provide an indication of the selected operating program to the processor 202. Examples of other such user interfaces include, therefore, but are not limited to, keyboards and speech inputs.

The processor 202 is configured to receive a selection of an operating program by a user 210 via the user interface 201, and cause the selected operating program to be transmitted to the controller 300. This may, in some examples, comprise the processor 202 obtaining the selected operating program, and transmitting it to the controller 300 of the appliance 400 via the communications interface 204. As mentioned above, the step of obtaining the selected operating program can comprise receiving the operating program from a remote computer storage (e.g. server 520), possibly over a network 510, or fetching the operating program from the data storage 203 of the user device 200.

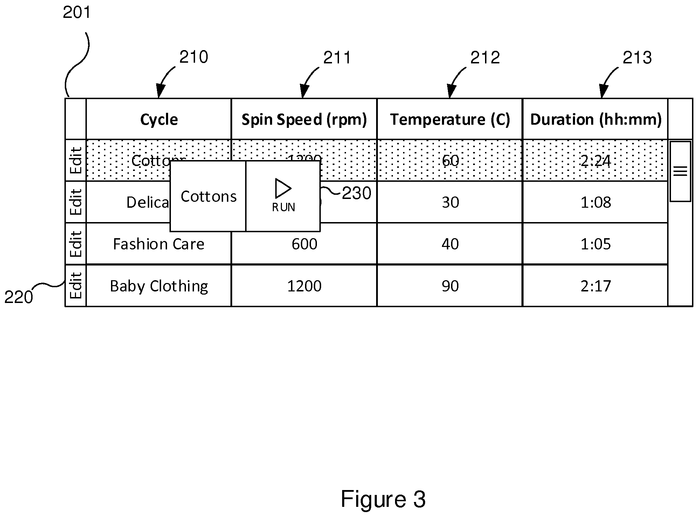

With reference to Figure 3, an example of the user 210 using the user interface 201 of the user device 200 to select an operating program to be run will be described. In the example of Figure 3, the user interface 201 is a graphical user interface. The user interface 201 is shown in Figure 3 displaying four operating programs ("cottons", "delicates", "fashion care", and "baby clothing"), though it is appreciated that more or fewer operating programs may be displayed, and that more operating programs may be present than shown on a display of the user interface 201 at any one time.

Each operating program is identified by a name 210. Each operating program is associated with different attributes (i.e. characteristics of the operating program). In this example, each operating program is a washing cycle having a spin speed 211, washing temperature 212, and duration 213.

The user 210 may be provided with an option to edit 220 the operating programs. For example, the user 210 might select an edit option 220 for a given operating program and change (input a new value for) one or more of the attributes for that operating program (such as spin speed 211, temperature 212, and duration 213 in the case of the appliance 400 being a washing machine). In response to the user 210 inputting a new value for an attribute of an operating program, that attribute of that operating program stored in data storage 203 is updated to the new value. Hence, when that operating program is, at a future time, run on the appliance 400, it is run according to the new value for that attribute.

The user 210 may be provided with an option to add a new operating program, i.e. to create an operating program. For example, the user 210 may use the user device 200 to specify a name 210, spin speed 211, temperature 212, and duration 213 of an entirely new operating program not (currently) found in the set of available operating programs. As another example, when the appliance 400 is an oven, the user 210 may create a special baking program for the oven by specifying (via the user interface 201) values for attributes such as baking temperature and baking time.

Operating programs may be accessible by the user device 200 from external sources. For example, the user 210 may access additional operating programs from the remote server 520 over the network 510. Hence, the user device 200 is, in some examples, able to download operating programs from an external source and save them to its internal data storage 203 and then send a selected operating program from the user device 200 to the controller 300 of the appliance 400. The user device 200 is also or alternatively able in some examples to send an instruction to the external source, such as a remote server 520, to cause the external source to transmit a selected operating program directly (not via the user device 200) to the controller 300 of the appliance 400.

The external source may be one or more servers (e.g. server 520) providing an "app store" through which the user 210 may browse and purchase new operating programs for download.

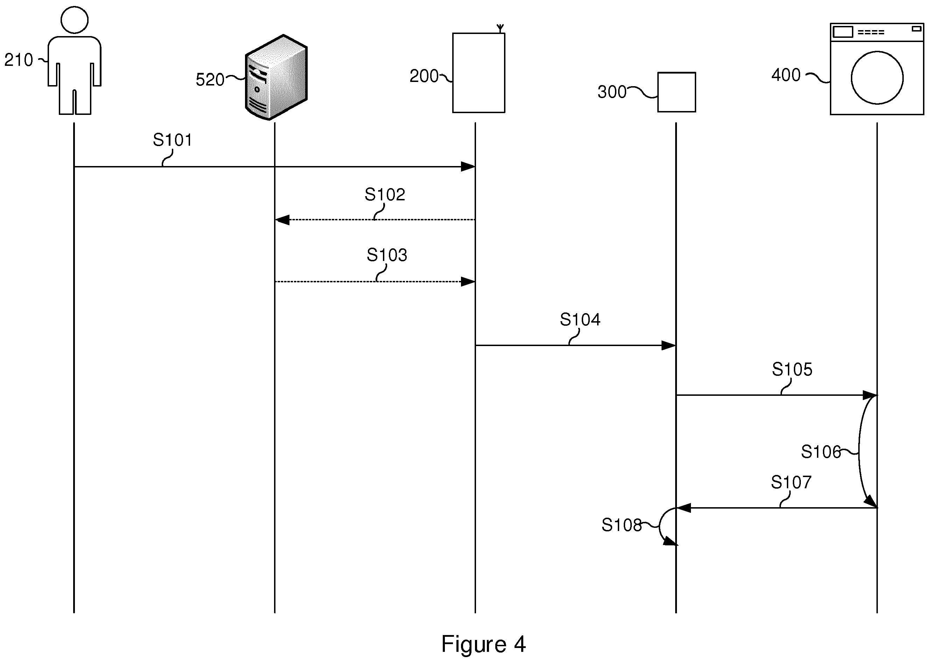

Given the above, it is therefore understood that the user 210 is able to use the user interface 201 to select a desired one of the operating programs. In the example of Figure 3, the user 210 has selected "cottons". The user 210 may then be presented with an option to run 230 the selected operating program, as shown in Figure 3. Alternatively, the selected operating program may be automatically run. "Run" here means that the user 210 indicates he/she wishes the selected operating program to be enacted by the appliance 400. The steps carried out by the system 100 to do so in an example are described below with reference to Figure 4.

Figure 4 illustrates an example control flow within the system 100. At step S101, the user 210 selects a desired operating program using the user device 200 (e.g. as described above with reference to Figure 3). As mentioned above, this may comprise the user 210 browsing an "app store" or other external source of operating programs.

In response to the user 210 selecting the desired operating program, the processor 202 of the user device 200 obtains the desired operating program. In the example of Figure 4, this comprises the processor 202 accessing server 520 (possibly over the network 510) at step S102 and receiving the operating program at step S103.

The processor 202 may then optionally store the operating program to internal data storage 203 of the user device 200. This allows the user 210 to save a plurality of operating programs on the user device 200 for future use (in accordance with steps S104-S108 described below).

At step S104, the processor 202 transmits the operating program to the controller 300 (e.g. using communications interface 204). The controller 300 receives the operating program via the input 301 and stores it in the internal data storage 303 of the controller 300.

An alternative is for the processor 202 of the user device 200to transmit an instruction to the server 520 (or other external data storage) instructing the server 520 to send the selected operating program directly to the controller 300 of the appliance 400. In such cases, steps S103 and S104 are replaced by a single step comprising transmission of the operating program from the server 520 to the controller 300.

At steps S105-S107, the processor 302 of the controller 300 causes the operating program to be run on the appliance 400. Step S105 represents the start of the operating program, step S106 represents the operating program being run, and step S107 represents the end of the operating program.

In response to completion of the operating program, the processor 302 of the appliance 400 deletes the operating program from the data storage 303 of the appliance 400, as represented by step S108. Hence, data storage 303 of the controller 300 (e.g. on the mainboard of the appliance 400) need only comprise enough computer data storage capacity for a single operating program at a time. This vastly reduces the required data storage space compared to traditional appliances which store a plurality of operating programs as the appliance 400 in effect need only store one operating program at a time and only when the operating program is needed.

The user device 200 may be arranged to enable the user to identify one or more operating programs as "favourites", which can be quickly and easily selected by the user when needed. This reflects the fact that whilst conventional appliances, such as washing machines, may be provided by manufacturers with a large number of operating programs with a large number of options, the experience is that many users use only a handful of operating programs in practice.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A controller for controlling an appliance, the controller comprising:
data storage for storing data;
an input for receiving operating programs; and
a processor configured to:
in response to receiving an operating program via the input, store the operating program to the data storage;
cause the stored operating program to be executed by the appliance; and
delete the operating program from the data storage upon completion of said execution.

2. A controller according to claim 1, wherein the data storage comprises only enough storage to store a single operating program at a time.

3. A controller according to claim 1 or claim 2, wherein the data storage comprises non-volatile data storage.

4. A controller according to any of claims 1 to 3, wherein the data storage comprises volatile data storage.

5. A user device for controlling operation of an appliance, the user device comprising:
a user interface;
a communications interface for enabling operating programs to be transmitted to said appliance; and
a processor configured to:
receive a selection of an operating program by a user via the user interface; and
cause the selected operating program to be transmitted to the appliance.

6. A user device according to claim 5, wherein the processor is configured to cause the selected operating program to be transmitted to the appliance by obtaining the selected operating program and transmitting the selected operating program from the user device to the appliance via the communications interface.

7. A user device according to claim 6, wherein the processor is configured to, after obtaining the selected operating program: receive user input for editing the selected operating program prior to transmitting the operating program; amend the selected operating program in accordance with the user input; and transmit the amended operating program to the appliance.

8. A user device according to claim 6 or claim 7, wherein the processor is configured to obtain the selected operating program from an internal data storage of the user device.

9. A user device according to any of claim 6 to 8, wherein the processor is configured to obtain the selected operating program from an external data storage.

10. A user device according to claim 9, wherein the processor is configured to obtain the selected operating program from said external data storage over the Internet.

11. An appliance comprising a controller according to any of claims 1 to 4.

12. An appliance according to claim 11, wherein the appliance is a washing machine.

13. A system comprising a controller according to any of claims 1 to 4 and a user device according to any of claims 5 to 10.

14. A computer program for controlling an appliance, the computer program comprising computer-executable code configured so as when executed by one or more processors to perform:
in response to receiving an operating program for the appliance via an input, storing the operating program to a data storage of the appliance;
causing the stored operating program to be executed by the appliance; and
deleting the operating program from the data storage upon completion of said execution.

15. A computer program for a user device to enable control of operation of an appliance, the computer program comprising computer-executable code configured so as when executed by one or more processors to perform:
receiving a selection of an operating program by a user via a user interface; and
causing the selected operating program to be transmitted to the appliance.
